Europäisches Patentamt

(19) European Patent Office

Office européen des brevets

(11) Numéro de publication: **0 181 820**
**B1**

## FASCICULE DE BREVET EUROPÉEN

(12)

(12)

(45) Date de publication du fascicule du brevet:
10.08.88

(21) Numéro de dépôt: **85402152.4**

(22) Date de dépôt: **07.11.85**

(51) Int. Cl.⁴: **B 01 D 53/34,** B 01 D 45/12

(54) Installation pour le traitement de fumées par un produit en poudre.

(30) Priorité: **07.11.84 FR 8416952**

(43) Date de publication de la demande:
**21.05.86 Bulletin 86/21**

(45) Mention de la délivrance du brevet:
**10.08.88 Bulletin 88/32**

(84) Etats contractants désignés:
**AT BE CH DE GB IT LI NL SE**

(56) Documents cité:
**DE-A-2 518 079**
**DE-A-3 235 559**
**DE-A-3 240 373**
**FR-A-2 139 648**

(73) Titulaire: **SYPRIM AIR INDUSTRIE ENVIRONNEMENT, 31, Boulevard de la Paix, F-78100 Saint Germain en Laye (FR)**

(72) Inventeur: **Toupain, Yves, 18 bis rue Eiffel, F-78700 Conflans St Honorine (FR)**

(74) Mandataire: **Jacquelin, Marc- Henri, Cabinet PLASSERAUD 84, rue d'Amsterdam, F-75009 Paris (FR)**

LIBER, STOCKHOLM 1988

## Description

La présente invention concerne une installation pour le traitement de fumées par un produit en poudre, du type comportant d'une part une colonne de réaction essentiellement verticale, à la base de laquelle s'effectue une mise en contact entre lesdites fumées et le produit en poudre, la suspension ainsi obtenue étant animée d'un mouvement ascensionnel dans la colonne, et d'autre part des dispositifs séparateurs en communication avec la partie supérieure de la colonne, destinés à effectuer une séparation entre les gaz épurés et le produit en poudre ayant servi au traitement.

Le traitement en question aura pour but, le plus souvent, de faire en sorte que ledit produit en poudre, à savoir le réactif, absorbe à sec, par un contact intime avec les gaz, les polluants gazeux contenus dans les fumées, par un procédé couramment appelé, pour cette raison, "Dry Scrubbing".

Ce traitement peut s'appliquer par exemple à la captation de SO2 ou, dans l'industrie du verre, de HF par la chaux, à la captation de HCl, également par la chaux, dans le cas des fumées provenant de l'incinération des ordures ménagères ou industrielles, ou encore, d'une façon générale, à la captation de différents gaz acides contenus dans des fumées.

Les installations actuellement connues et concues spécialement pour la mise en oeuvre des traitements du genre rappelé ci-dessus sont habituellement constituées de plusieurs ensembles connectés les uns aux autres par des conduites de liaison, et elles comprennent notamment une conduite reliant la sortie de la colonne de réaction qui a été mentionnée au début à l'entrée des dispositifs séparateurs, ordinairement du genre à cyclones, une conduite supplémentaire devant être prévue en général entre la sortie "gaz" de ces dispositifs séparateurs et l'entrée d'un dépoussiéreur, tel que filtre à tissu ou électrofiltre, les fumées traitées étant ensuite évacuées à l'atmosphère par une cheminée.

En conséquence, la longueur totale des différentes conduites de liaison est importante, ce qui augmente la dépense de matériel et les pertes calorifiques.

La séparation de ces installations en différents ensembles nécessite par ailleurs l'utilisation d'une charpente très importante, puisque chaque ensemble doit être supporté individuellement.

Enfin, la colonne de réaction constituant le premier ensemble de l'installation doit fréquemment être isolée thermiquement de l'extérieur, notamment pour éviter les colmatages dans le cas du traitement de produits risquant d'être déliquescents.

Le but de la présente invention est donc essentiellement d'établir une installation du type mentionné au début, pour effectuer les différents traitements précités ou des traitements analogues, et qui soit plus compacte et au total de structure plus simple et moins encombrante que les installations connues, qui nécessite une charpente plus réduite, et dans laquelle, en outre, les pertes caloriques soient moins élevées, avec une isolation thermique plus réduite.

A cet effet, une installation du type général décrit au début sera, conformément à la présente invention, essentiellement caractérisée en ce que lesdits dispositifs séparateurs sont logés dans la partie moyenne d'une enveloppe supportant ladite colonne en l'entourant, cette enveloppe étant elle-même portée par une charpente.

Cette disposition élimine d'emblée la charpente qui, dans les installations connues, devait être prévue pour supporter lesdits dispositifs séparateurs. Ces derniers seront en effet supportés par la colonne de réaction et par l'enveloppe précitée, cette enveloppe supportant elle-même la colonne de réaction, l'ensemble étant ainsi autoporteur.

De plus, on comprend que cette enveloppe entourant la colonne de réaction permettra de créer autour de cette dernière un espace d'isolation thermique, d'où résulteront des pertes caloriques plus faibles de la colonne de réaction vers l'extérieur, ce qui permettra le plus souvent de réduire l'isolation thermique nécessaire.

Dans le même ordre d'idée, et notamment pour conserver à l'installation une grande compacité, on pourra prévoir en outre que l'extrémité supérieure ouverte de la colonne de réaction communique avec l'entrée desdits dispositifs séparateurs par une gaine coiffant la colonne et dont la base pénètre dans l'enveloppe.

Entre cette gaine et la colonne sera ainsi créée une conduite annulaire de mise en communication de l'extrémité supérieure ouverte de la colonne de réaction avec l'entrée des dispositifs séparateurs.

Là encore, il n'y aura besoin d'aucune charpente supplémentaire pour supporter ces moyens de liaison, la gaine comme la colonne de réaction étant supportées par l'enveloppe elle-même.

Plus précisément, on pourra faire en sorte que la partie moyenne de ladite enveloppe, la colonne de réaction et ladite gaine soient constituées essentiellement de cylindres coaxiaux, le diamètre de la gaine étant intermédiaire entre le diamètre de la colonne et celui de ladite partie moyenne de l'enveloppe, d'où une grande simplicité de la structure.

Avantageusemnt, on prévoira que la partie inférieure de ladite enveloppe est constituée sous la forme l'une trémie de récupération dudit produit en poudre ayant servi au traitement, cette partie inférieure de l'enveloppe communiquant avec les sorties "matière" desdits dispositifs séparateurs.

Bien entendu, cette trémie, contrairement aux parties précédemment décrites, ne pourra être centrée sur l'axe général de la colonne de réaction, de la gaine et de la partie moyenne de l'enveloppe, mais elle pourra constituer une continuité de cette enveloppe et donc supporter encore, directement ou indirectement, la colonne.

Quant à la partie supérieure de l'enveloppe dont la partie moyenne contient lesdits dispositifs séparateurs, on pourra avantageusement prévoir qu'elle constitue autour de la gaine un collecteur de sortie des gaz épurés, cette partie supérieure de l'enveloppe communiquant avec les sorties "gaz" desdits dispositifs séparateurs.

Là encore, cette disposition préserve la très grande simplicité de l'installation, de même que le caractère très direct des liaisons entre ses différentes parties.

Pour améliorer le rendement de l'installation et permettre à cet effet la réutilisation dans la colonne de réaction du produit pulvérulent ayant déjà parcouru la colonne, mais encore partiellement actif, on pourra prévoir de plus que la trémie précitée est en communication, par l'intermédiaire d'un répartiteur, avec une entrée de recyclage branchée à la base de ladite colonne.

Il s'agit là d'une disposition déjà connue en elle-même, mais que la présente invention permet de mettre en oeuvre très facilement et moyennant encore des liaisons très courtes, la sortie de la trémie n'étant que faiblement décalée par rapport à l'axe de la colonne de réaction.

Un mode d'exécution d'une installation conforme à l'invention va maintenant être décrit, à titre d'exemple nullement limitatif, avec référence aux figures du dessin annexé dans lequel:

- la figure 1 est une vue en coupe axiale schématique d'une installation conforme à l'invention ; et

- la figure 2 est une vue partielle de l'extérieur du côté droit de l'installation.

L'installation représentée sur les figures comporte comme élément principal une colonne de réaction verticale 1 pourvue à sa base d'un raccord d'entrée de fumées 2 lui-même connecté à un convergent-divergent 3 - 4 de mise en suspension d'un produit réactif pulvérulent. Ce produit est amené à la base de la colonne par une conduite schématisée en 5 et débouchant légèrement au-dessus du col 6 du convergent-divergent, ce grâce à quoi on peut assurer une excellente dispersion du produit pulvérulent dans le flux ascendant des fumées. Ainsi, on obtient une efficacité maximale des réactions entre le produit réactif et les fumées durant tout le temps de leur ascension dans la colonne, cette ascension s'effectuant cependant à vitesse relativement élevée (de l'ordre de 10 m/s).

A la sortie de la colonne 1, une première séparation doit être assurée entre les fumées traitées et le produit pulvérulent, lequel s'est combiné avec les polluants à éliminer (par exemple des gaz acides, le produit actif étant alors de la chaux).

Cette première séparation, effectuée entre les fumées épurées et les plus grosses particules, est assurée par un ensemble de cyclones 7. Conformément à l'invention, ces cyclones sont logés dans la partie moyenne 8m d'une enveloppe 8 qui entoure la colonne 1 sur une partie de sa hauteur. Les entrées 7e des cyclones communiquent avec l'extrémité supérieure ouverte 1s de la colonne de réaction par une gaine 9 coiffant la colonne et dont la base 9b pénètre dans l'enveloppe 8. On voit que la partie moyenne 8m de l'enveloppe, la majeure partie de la colonne 1 de réaction et la gaine 9 peuvent être constituées de cylindres de tôle coaxiaux et sont donc très faciles à fabriquer et à mettre en place. Les liaisons mécaniques entre ces différentes parties peuvent être établies par tous moyens, et notamment par soudage, rivetage ou boulonnage.

De toute façon, on voit que les cyclones séparateurs 7 n'ont pas besoin de structure porteuse propre, comme dans les installations de l'art antérieur, étant donné qu'ils sont maintenus entre la colonne 1 d'une part, l'enveloppe 8 d'autre part. Il en est de même pour la gaine 9, dont la base est fixée aux entrées 7e des cyclones et qui peut en outre être maintenue, en 10, au niveau de sa pénétration dans l'enveloppe 8.

L'ensemble de l'installation est ainsi autoporteur et extrêmement compact. Une seule charpente 11 est nécessaire pour la supporter.

Les liaisons entre les différentes parties de l'installation sont extrêmement directes et toutes internes, ce qui diminue au maximum les déperditions caloriques

On voit qu'après leur sortie de l'extrémité 1s de la colonne, les fumées traitées et particules de produit réactif descendent, à vitesse plus faible, dans l'espace annulaire 12 constitué entre gaine 9 et colonne 1, la réaction pouvant ainsi se poursuivre efficacement jusqu'aux entrées 7e des cyclones 7; l'espace 12 constitue en outre une isolation thermique de la partie supérieure de la colonne 1 vis-à-vis de l'extérieur, la partie moyenne de cette colonne en étant de même isolée par l'espace annulaire contenant les cyclones 7. On économise ainsi les moyens d'isolation thermique qui sont ordinairement prévus lorsqu'il est nécessaire que les fumées restent chaudes pendant leur épuration.

Dans les cyclones 7, la centrifugation permet d'effectuer une première séparation entre les fumées traitées et les plus grosses particules du produit, lesquelles tombent, par les sorties "matière" 7m des cyclones, dans une trémie asymétrique 8i constituant la partie inférieure de l'enveloppe 8.

Dans des proportions déterminées par un répartiteur 13, le produit, qui est encore partiellement actif, peut d'une part être évacué, en 14, et d'autre part recyclé dans la colonne, en 15, l'entrée 5 constituant alors seulement un apport de produit frais, compensant la partie évacuée en 14, ainsi que les très fines particules s'échappant des sorties "gaz" 7g des cyclones 7, en même temps que les fumées épurées.

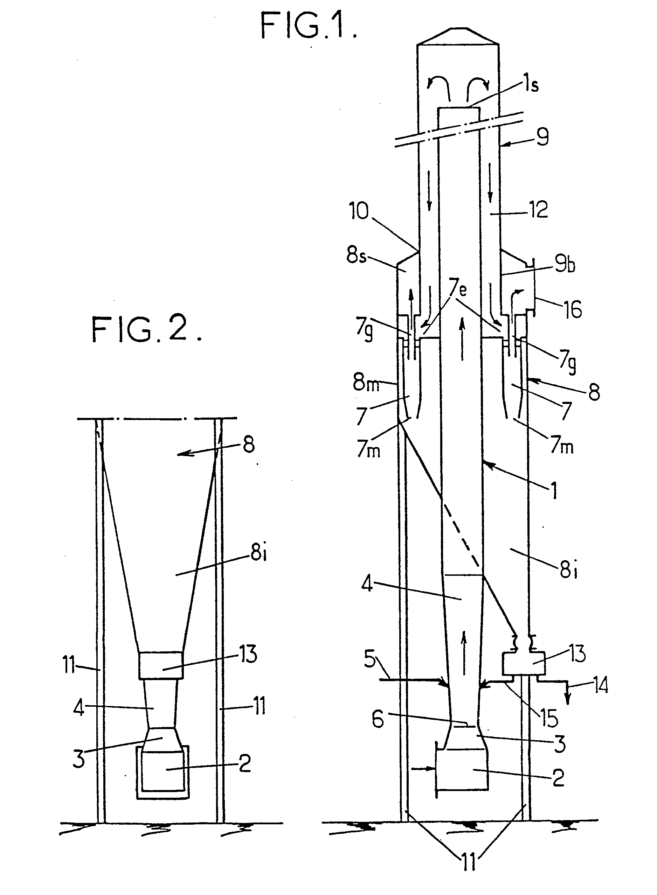

On voit également sur la figure 1 que la partie supérieure 8s de l'enveloppe 8 constitue autour de la base 9b de la gaine 9 un collecteur de sortie des gaz épurés, en communication avec lesdites sorties 7g des cyclones 7. La sortie 16 de ce collecteur est reliée à un dispositif de filtrage destiné à effectuer une séparation entre la partie purement gazeuse des fumées et les plus fines particules du produit de traitement et autres poussières qu'elles contiennent à leur sortie des cyclones; il pourra s'agir de tout filtre approprié, par exemple un filtre à tissu ou un électrofiltre. Après quoi les fumées totalement épurées pourront être évacuées à l'atmosphère.

Comme avantage supplémentaire d'une telle installation, il y a lieu de noter que les cyclones 7 sont réchauffés par les fumées montant dans la colonne de réaction 1, ce qui leur évite tout colmatage, du fait de matières contenues dans les fumées et qui pourraient s'agglomérer en refroidissant. Cet avantage est corollaire de l'excellente et économique isolation thermique obtenue pour la colonne 1 vis-à-vis de l'extérieur. Ce risque de colmatage est de même évité pour les matières qui s'accumulent dans la trémie 8i.

Comme il va de soi on peut envisager dans certains cas de remplacer les cyclones 7 par des manches de filrage ou autres filtres, auxquels cas la sortie 16, au lieu d'être reliée à un filtre en tissu ou électrofiltre, comme indiqué plus haut, déboucherait directement à l'atmosphère.

## Revendications

1. Installation pour le traitement de fumées par un produit en poudre, du type comportant d'une part une colonne de réaction essentiellement verticale, à la base de laquelle s'effectue une mise en contact entre lesdites fumées et le produit en poudre, la suspension ainsi obtenue étant animée d'un mouvement ascensionnel dans la colonne, et d'autre part des dispositifs séparateurs en communication avec la partie supérieure de la colonne, destinés à effectuer une séparation entre les gaz épurés et le produit en poudre ayant servi au traitement, caractérisée en ce que lesdits dispositifs séparateurs (7) sont logés dans la partie moyenne (8m) d'une enveloppe (8) supportant ladite colonne (1) en l'entourant, cette enveloppe étant elle-même portée par une charpente (11).

2. Installation selon la revendication 1, caractérisée en ce que l'extrémité supérieure ouverte (1s) de la colonne de réaction (1) communique avec l'entrée (7e) desdits dispositifs séparateurs (7) par une gaine (9) coiffant la colonne et dont la base (9b) pénètre dans l'enveloppe.

3. Installation selon les revendications 1 et 2, caractérisée en ce que la partie moyenne (8m) de ladite enveloppe (8), la colonne de réaction (1) et ladite gaine (9) sont constituées essentiellement de cylindres coaxiaux, le diamètre de la gaine (9) étant intermédiaire entre le diamètre de la colonne (1) et celui de ladite partie moyenne (8m) de l'enveloppe.

4. Installation selon l'une quelconque des revendications précédentes, caractérisée en ce que la partie inférieure (8i) de ladite enveloppe (8) est constituée sous la forme d'une trémie de récupération dudit produit en poudre ayant servi au traitement, cette partie inférieure (8i) de l'enveloppe communiquant avec les sorties "matière" (7m) desdits dispositifs séparateurs.

5. Installation selon l'une quelconque des revendications 2 à 4, caractérisée en ce que la partie supérieure (8s) de ladite enveloppe (8) constitue autour de la gaine (9) un collecteur de sortie des gaz épurés, cette partie supérieure (8s) de l'enveloppe (8) communiquant avec les sorties "gaz" (7g) desdits dispositifs séparateurs.

6. Installation selon la revendication 4 ou 5, caractérisée en ce que ladite trémie (8i) est en communication, par l'intermédiaire d'un répartiteur (13), avec une entrée de recyclage (15) branchée à la base de ladite colonne.

## Patentansprüche

1. Vorrichtung zur Behandlung von Rauchgasen mit einem pulvrigen Material

mit einer im wesentlichen vertikalen Reaktionssäule, an deren Basis die genannten Rauchgase und das pulvrige Material miteinander in Kontakt gebracht werden, wobei die dadurch erhaltene Suspension mit einer Aufwärtsbewegung in der Säule beaufschlagt wird,

sowie mit Trennvorrichtungen, die mit dem oberen Teil der Reaktionssäule in Verbindung stehen und eine Trennung der gereinigten Gase von dem pulvrigen Material bewirken, das zur Behandlung diente,

dadurch gekennzeichnet,

daß die Trennvorrichtung (7) im mittleren Teil (8m) einer Hülle (8) angeordnet sind, die die Reaktionssäule (1) trägt, indem sie diese umschließt, und die ihrerseits von einer Tragkonstruktion (11) getragen ist.

2. Vorrichtung nach Anspruch 1, dadurch gekennzeichnet, daß das obere offene Ende (1s) der Reaktionssäule (1) mit dem Einlaß (7e) der Trennvorrichtung (7) über einen Mantel (9) verbunden ist, der die Säule abdeckt und dessen Basis (9b) in die Hülle eindringt.

3. Vorrichtung nach Anspruch 1 und 2, dadurch gekennzeichnet, daß der mittlere Teil (8m) der Hülle (8), die Reaktionssäule (1) sowie der genannte Mantel (9) im wesentlichen aus koaxialen Zylindern bestehen, wobei der Durchmesser des Mantels (9) zwischen dem der Säule (1) und dem des mittleren Teils (8m) der Hülle liegt.

4. Vorrichtung nach einem der vorhergehenden Ansprüche, dadurch gekennzeichnet, daß der untere Teil (8i) der Hülle (8) in Form eines Rückführungstrichters ausgebildet ist, der das pulvrige Produkt zurückführt, nachdem es der Behandlung gedient hat, wobei dieser untere Teil (7i) der Hülle mit den "Materialauslässen" (7m) der Trennvorrichtungen in Verbindung steht.

5. Vorrichtung nach einem der Ansprüche 2 bis 4, dadurch gekennzeichnet, daß der obere Teil (8s) der Hülle (8) um den Mantel (9) einen Ausgangssammler für die gereinigten Gase bildet und daß dieser obere Teil (8s) der Hülle (8) mit den "Gasauslässen" (7g) der Trennvorrichtung in Verbindung steht.

6. Vorrichtung nach Anspruch 4 oder 5, dadurch gekennzeichnet, daß der Rückführungstrichter (8i) über einen Teiler repartiteur (13) mit einem Recycling-Eingang (15) verbunden ist, der an der Basis der Säule abzweigt.

## Claims

1. Plant for processing smoke with a powdered product, of the type comprising on the one hand a substantially vertical reaction column, the base of which contact is established between the said smoke and the powdered product, movement being imparted to the resultant suspension in such a way as to cause it to rise through the column, and on the other hand separating means communicating with the upper part of the column, intended to bring about separation of the cleansed gases from the powdered product used in the processing, characterised in that the said separating means (7) are housed in the middle part (8m) of a casing (8) supporting the said column (1) which it encloses, the casing being itself carried by a framework (11).

2. Plant according to Claim 1, characterised in that the open top end (1s) of the reaction column (1) communicates with the intake (7e) of the said separating means (7) via a sheath (9) surmounting the column and the base (9b) of which penetrates the casing.

3. Plant according to Claims 1 and 2, characterised in that the middle part (8m) of the said casing (8), the reaction column (1) and the said sheath (9) consist essentially of coaxial cylinders, the diameter of the sheath (9) being midway between the diameter of the column (1) and that of the said middle part (8m) of the casing.

4. Plant according to any one of the preceding Claims, characterised in that the bottom part (8i) of the said casing (8) takes the form of a funnel for recovering the said powdered product which has been used for the processing, this bottom part (8i) of the casing communicating with the "matter" outlets (7m) of the said separating means.

5. Plant according to any one of Claims 2 to 4, characterised in that the upper part (8s) of the said casing (8) constitutes around the sheath (9) a discharge manifold for the cleansed gases, this upper part (8s) of the casing (8) communicating with the "gas" outlets (7g) of the said separating means.

6. Plant according to Claim 4 or 5, characterised in that through a distributor (13) the said funnel (8i) communicates with a recycling intake (15) connectes to the base of the said column.

FIG.1.

FIG.2.